**Europäisches Patentamt**

**European Patent Office**

**Office européen des brevets**

(19)

(11) Numéro de publication : **0 330 564 B1**

# (12) FASCICULE DE BREVET EUROPEEN

(45) Date de publication du fascicule du brevet :
**02.09.92 Bulletin 92/36**

(21) Numéro de dépôt : **89400486.0**

(22) Date de dépôt : **22.02.89**

(51) Int. Cl.⁵ : **B23Q 17/22**

---

(54) **Système pour la vérification de la programmation de données contenues dans un logiciel pour machine-outil.**

---

(30) Priorité : **23.02.88 FR 8802146**

(43) Date de publication de la demande :
**30.08.89 Bulletin 89/35**

(45) Mention de la délivrance du brevet :
**02.09.92 Bulletin 92/36**

(84) Etats contractants désignés :
**DE ES GB IT NL**

(56) Documents cités :
**EP-A- 0 247 939**
**DE-A- 2 512 787**
**FR-A- 2 072 277**
**FR-A- 2 440 572**

(73) Titulaire : **AEROSPATIALE SOCIETE**
**NATIONALE INDUSTRIELLE**
**37, Boulevard de Montmorency**
**F-75016 Paris (FR)**

(72) Inventeur : **Bedin, Henri**
**27, Avenue des Pyrenées**
**F-31650 Saint-Orens (FR)**

(74) Mandataire : **Bonnetat, Christian et al**
**CABINET BONNETAT 23, Rue de Léningrad**
**F-75008 Paris (FR)**

EP 0 330 564 B1

## Description

La présente invention concerne un système pour la vérification de la programmation de données contenues dans un logiciel pour machine-outil numérique et relatives notamment au diamètre et/ou à la longueur de sortie d'outils destinés à être montés successivement et automatiquement, selon un cycle d'usinage programmé dans le logiciel, sur une broche de la machine-outil, la vérification desdites données étant effectuée pour chaque outil avant l'usinage des pièces qu'il doit effectuer.

Actuellement, dans l'industrie, la fabrication de pièces en grande série est avantageusement effectuée sur des centres d'usinage qui comportent notamment une machine-outil dont le fonctionnement est commandé par une programmation appropriée. Pour pouvoir réaliser différents usinages sur les pièces, il est nécessaire de prévoir plusieurs outils différents, tels que des fraises, des forets, des alésoirs, etc...

Ces outils sont préalablement choisis selon le type d'opérations à réaliser sur lesdites pièces, et sont montés sur des mandrins respectifs ou analogues, puis sont identifiés. Les outils sont mesurés sur un banc de préréglage, leur longueur et leur diamètre étant relevés par un opérateur qui entre ces données dans le logiciel, après quoi ils sont disposés dans le magasin de stockage de la machine-outil. Par exemple, le document EP-A-0247 939 décrit une machine pour le réglage automatique et la mesure de la longueur de sortie et du diamètre d'un outil.

Le programme d'usinage de la machine peut être lancé et il commande la sélection de l'outil, la mise en place de cet outil dans la broche de la machine, la prise en compte de la longueur et/ou du diamètre de l'outil, la rotation de la broche, et l'usinage proprement dit. L'identification, la saisie et l'introduction de l'outil de coupe sont réalisées par un manipulateur.

Ces centres d'usinage, largement employés dans l'industrie pour la fabrication de pièces, donnent de bons résultats puisqu'ils allient à la fois productivité et qualité d'usinage.

Toutefois, il est bien évident que si l'un des paramètres, concernant l'un des outils et contenu dans le logiciel, est incorrect, des incidents peuvent se produire. Par exemple, dans le cas où la longueur entrée dans le logiciel ne correspond pas à la longueur réelle de l'outil, cela entraînera une erreur de positionnement dudit outil. Ce dernier avancera par exemple d'une distance supérieure à celle qu'il aurait dû effectuer, et heurtera la pièce à usiner, ce qui risque de provoquer, outre la destruction de la pièce et de l'outil, des blessures pour l'opérateur.

Ces erreurs de programmation des caractéristiques de chaque outil, qui ne sont pas toujours immédiatement décelables au cours de l'usinage des pièces, sont soit des erreurs imputables à l'opérateur, comme par exemple, une mauvaise lecture au banc de préréglage, une erreur d'entrée dans le logiciel de l'une des données relatives à l'outil et relevée par l'opérateur, l'omission d'entrée de l'une des données, telle que la longueur de l'outil, un mauvais choix d'un outil en cours de préparation, soit des erreurs imputables à la machine-outil, comme par exemple une mauvaise sélection de l'outil ou une perte des origines de la machine. Ces erreurs sont la cause notamment de chocs importants entre l'outil et la pièce à usiner, et elles ont pour conséquence d'entraîner, outre la mise au rebut de l'outil et des pièces, l'immobilisation et la révision de la machine-outil provoquant l'interruption du cycle de production.

La présente invention a pour but de remédier à ces inconvénients, et concerne un procédé et un dispositif pour la vérification de la programmation de données contenues dans un logiciel pour machine-outil et notamment relatives à la longueur de sortie et/ou au diamètre d'outils utilisés, ledit système permettant ainsi de contrôler le cycle d'usinage programmé, avant chaque utilisation des outils pour l'usinage des pièces.

A cet effet, selon l'invention, le procédé pour la vérification de la programmation de données contenues dans un logiciel pour machine-outil et relatives au diamètre et/ou à la longueur de sortie d'outils destinés à être montés, selon un cycle d'usinage automatique programmé dans ledit logiciel, sur une broche de la machine-outil, ledit procédé permettant de vérifier, avant chaque utilisation des outils pour l'usinage des pièces, les données relatives au diamètre et/ou à la longueur de sortie de chaque outil entrées dans ledit logiciel, ledit procédé consistant :

– à agencer, à proximité de la broche de la machine-outil, un équipage mobile portant à une extrémité un palpeur ;

– à monter, entre ledit palpeur et ledit équipage mobile, des moyens de détection du déplacement dudit palpeur ;

– à introduire un gabarit dans la broche de ladite machine-outil, pour définir une position de référence correspondant à une position initiale imposée à chacun desdits outils lorsque ceux-ci sont maintenus successivement et automatiquement dans ladite broche avant le début de l'usinage ;

– à amener ledit palpeur dudit équipage, de façon tangente audit gabarit, afin que ledit palpeur définisse à son tour ladite position de référence ;

– à retirer ledit gabarit de ladite broche ; puis,

– à monter chacun desdits outils selon le cycle d'usinage successivement et automatiquement dans la broche, chacun de ceux-ci venant soit affleurer ledit palpeur, ce qui indique que la programmation du diamètre et/ou de la longueur de sortie de chacun desdits outils est correcte, soit toucher ledit palpeur en entraînant le déplacement dudit équipage mobile par rapport audit support et le déclenchement des moyens de détection qui arrêtent le cycle d'usinage.

Ainsi, dans le cas où un outil a touché le palpeur, l'opérateur peut rechercher l'erreur de programmation et la corriger, de façon que la programmation de la longueur de sortie et/ou du diamètre de l'outil soit alors exacte. Grâce au système de l'invention, l'opérateur peut aisément contrôler le cycle de programmation des différents outils utilisés sur le centre d'usinage préalablement au montage, des pièces à usiner sur la table de la machine-outil, en évitant ainsi les risques d'incidents mentionnés auparavant.

La présente invention concerne de plus un dispositif pour la vérification de la programmation de données contenues dans un logiciel pour machine-outil et relatives au diamètre et/ou à la longueur de sortie d'outils destinés à être montés, selon un cycle d'usinage automatique programmé dans ledit logiciel, sur une broche de la machine-outil, ledit dispositif permettant de vérifier, avant chaque utilisation des outils pour l'usinage des pièces, les données relatives au diamètre et/ou à la longueur de sortie de chaque outil entrées dans ledit logiciel, ledit dispositif comportant :

– un support fixe ;

– un équipage mobile, monté sur ledit support et susceptible d'être déplacé par rapport à celui-ci, ledit équipage portant à une extrémité un palpeur ;

– des moyens de détection du déplacement dudit palpeur lié audit équipage par rapport audit support fixe ; et

– un gabarit introduit dans la broche de ladite machine-outil  et définissant une position de référence correspondant à une position initiale imposée à chacun desdits outils lorsque ceux-ci sont maintenus successivement et automatiquement dans ladite broche avant le début de l'usinage, le palpeur dudit équipage étant ramené de façon tangente audit gabarit afin de définir à son tour ladite position de référence, ledit gabarit se présentant sous forme d'une plaque susceptible d'être introduite par l'intermédiaire d'un mandrin dans la broche de la machine-outil, et le plan de la plaque formant ledit gabarit étant orthogonal au plan défini par la face de la broche, et parallèle à l'axe de rotation de celle-ci et ledit gabarit présentant un premier bord de référence disposé perpendiculairement à l'axe de rotation de la broche et parallèlement à la face de celle-ci, un deuxième bord de référence prolongeant de façon perpendiculaire et dans le plan dudit gabarit une extrémité dudit premier bord, et qui est alors disposé parallèlement à l'axe de rotation de la broche et perpendiculairement à la face de celle-ci, et un troisième bord de référence incliné prolongeant dans le plan dudit gabarit l'autre extrémité dudit premier bord.

Ainsi, la distance séparant le premier bord du gabarit de la face de la broche peut servir de longueur de référence pour des outils tels que les alésoirs, les fraises, les tarauds, les forets, les barres de chariotage, etc...

Le second bord parallèle à l'axe de rotation de la broche peut servir au contrôle du diamètre d'outils tels que ceux énumérés ci-dessus ainsi que certaines fraises spéciales, alors que le troisième bord conique peut servir de référence aux contrôles des longueurs et du diamètre d'outils spécifiques, tels que les fraises dites "trois tailles".

Le logiciel de la machine-outil comporte alors les coordonnées de la position de référence correspondant à celles du gabarit, et à celles imposées à chacun desdits outils.

Selon une autre caractéristique dudit dispositif, le palpeur, susceptible d'être amené de façon tangente audit gabarit, peut présenter un contour qui comprend une partie conique, dont une génératrice est susceptible de venir, de façon tangente, au contact du troisième bord dudit gabarit, une partie cylindrique prolongeant la partie conique et dont une génératrice est susceptible de venir, de façon tangente, au contact du premier bord dudit gabarit, et un cône d'extrémité prolongeant ladite partie cyclindrique et dont la pointe est susceptible de venir, de façon tangente, au contact du deuxième bord dudit gabarit.

Ainsi, l'opérateur agence le palpeur, lié à l'équipage mobile, de façon qu'il vienne affleurer les bords dudit gabarit. A ce moment là, la position du palpeur correspond à la position de référence dudit gabarit, ce dernier pouvant être alors retiré de la broche.

Dans un mode préféré de réalisation, ledit équipage mobile comporte une plaque susceptible d'être liée fixement audit support et un levier, monté pivotant autour d'un axe par rapport à ladite plaque et portant à une extrémité une tige munie dudit palpeur, lesdits moyens de détection du déplacement dudit palpeur étant alors disposés entre ledit levier et ladite plaque fixée audit support.

Avantageusement, la tige et le palpeur sont disposés coaxialement selon un axe vertical perpendiculaire à l'axe de rotation de la broche, et l'axe de pivotement du levier portant la tige et le palpeur est perpendiculaire audit axe vertical commun à la tige et au palpeur et à l'axe de rotation de la broche. De préférence, la position de la tige et du palpeur le long de l'axe vertical est réglable au moyen de vis ou analogues.

Selon une autre caractéristique de l'invention, le montage de la plaque dudit équipage mobile sur ledit support peut être réalisé, d'une part, par l'intermédiaire de moyens de positionnement réglables prévus sur la plaque et sur le support et permettant de disposer ladite plaque dans un plan parallèle au plan formé par l'axe de rotation de la broche et l'axe vertical du palpeur, et d'autre part, par l'intermédiaire de moyens de fixation solidarisant la plaque audit support. De plus, les moyens de fixation de la plaque au support sont constitués par des vis ou analogues traversant des lumières ménagées dans la plaque, de sorte que celle-ci peut être déplacée dans son plan de positionnement, pour permettre le réglage du palpeur contre ledit gabarit.

Ainsi, grâce à ces différentes possibilités de réglage, l'opérateur peut aisément amener ledit palpeur dans la position de référence définie par ledit gabarit.

Dans un mode particulier de réalisation, lesdits moyens de détection peuvent comporter un contacteur fixé à une embase liée à ladite plaque, ledit contacteur étant en liaison avec le logiciel de la machine, et un organe lié audit levier et venant au contact dudit contacteur, et des moyens de rappel élastiques peuvent être prévus entre ladite embase et ledit levier, de sorte que lorsque ledit palpeur a été touché par un outil, ledit levier bascule autour de son axe de pivotement entraînant l'éloignement dudit organe du contacteur et l'interruption du cycle de fonctionnement de la machine, les moyens de rappel élastiques rappelant ensuite en position initiale ledit levier.

Selon une autre caractéristique de l'invention, ledit support peut être constitué d'une potence fixe et d'un profilé monté pivotant autour d'un axe de rotation sur ladite potence, ledit équipage mobile étant monté sur ledit profilé. Ladite potence est de préférence fixée au sol à proximité de ladite machine-outil.

Les figures du dessin annexé feront bien comprendre comment l'invention peut être réalisée Sur ces figures, des références identiques désignent des éléments semblables.

La figure 1 représente schématiquement une vue d'ensemble du dispositif selon l'invention monté à proximité d'une machine-outil.

La figure 2 représente, à une échelle agrandie, le palpeur dudit dispositif dans la position de référence définie par le gabarit introduit dans la broche de la machine-outil.

La figure 3 est une vue agrandie de l'équipage mobile monté sur le support et des moyens pour la détection du déplacement dudit palpeur.

La figure 4 est une coupe schématique dudit équipage mobile monté sur le support, selon la ligne IV-IV de la figure 3.

La figure 5 représente les différents contrôles de longueur, du profil, et du diamètre d'un premier type d'outil grâce au dispositif de l'invention.

La figure 6 illustre le cas dans lequel la longueur dudit outil de la figure 5, programmée dans le logiciel de la machine-outil, est erronée par rapport à sa longueur réelle, ledit outil heurtant le palpeur.

La figure 7 représente les contrôles de la longueur et du diamètre d'un deuxième type d'outil utilisé dans le cycle d'usinage de la machine-outil.

La figure 8 illustre le contrôle de la longueur programmée d'un troisième type d'outil par rapport à sa longueur réelle.

La figure 9 illustre les contrôles des longueurs et du diamètre d'un quatrième type d'outils.

Le dispositif selon l'invention est particulièrement approprié à la vérification de la programmation de données contenues dans un logiciel de machine-outil et relatives notamment au diamètre et/ou à la longueur de sortie d'outils destinés à être montés successivement et automatiquement, selon un cycle d'usinage programmé dans le logiciel, sur une broche de la machine-outil, la vérification des données et donc leur contrôle étant effectués avant chaque utilisation des outils pour l'usinage des pièces.

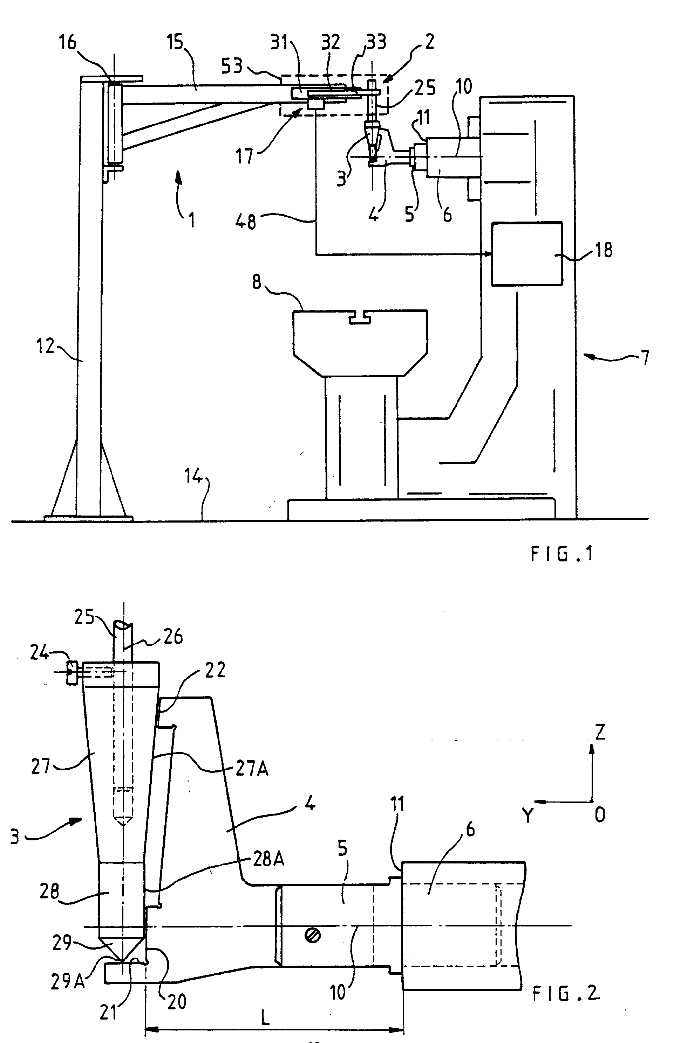

Le dispositif selon l'invention, montré sur la figure 1, comporte un support 1 sur lequel est monté un équipage mobile 2 portant à une extrémité un palpeur 3. Ce dernier affleure un gabarit 4 introduit par l'intermédiaire d'un mandrin 5 dans la broche 6 d'une machine-outil 7 de type à commande numérique, dont la table de travail 8 est destinée à recevoir les pièces à usiner et les dispositifs de blocage desdites pièces. Comme le montre la figure 1, l'axe de rotation 10 de la broche est horizontal, la face avant 11 de la broche 6, qui servira de point d'origine de référence pour la mesure de la longueur des outils, définissant un plan vertical de référence, perpendiculaire à l'axe de rotation 10 de la broche 6.

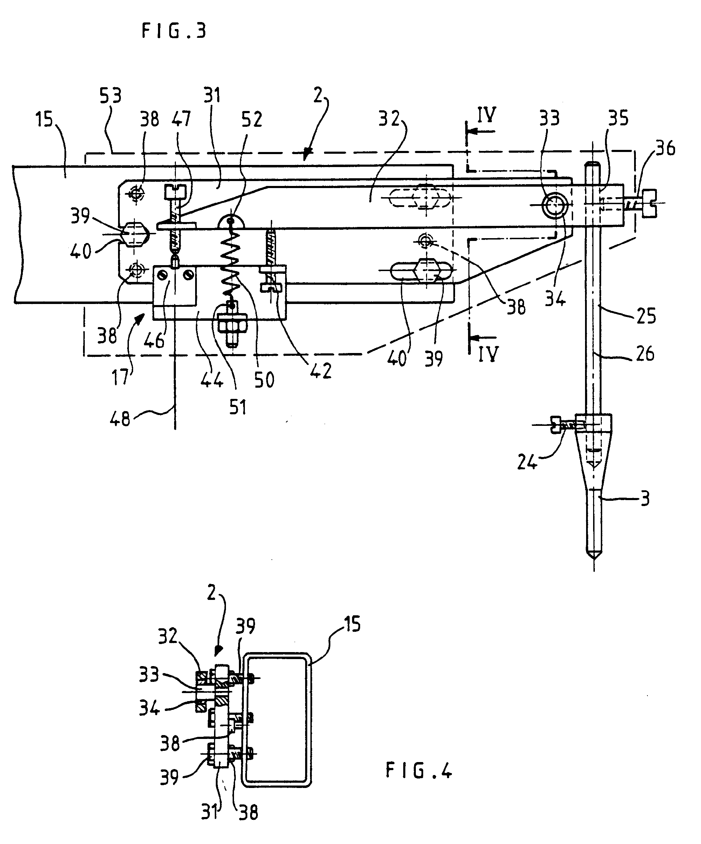

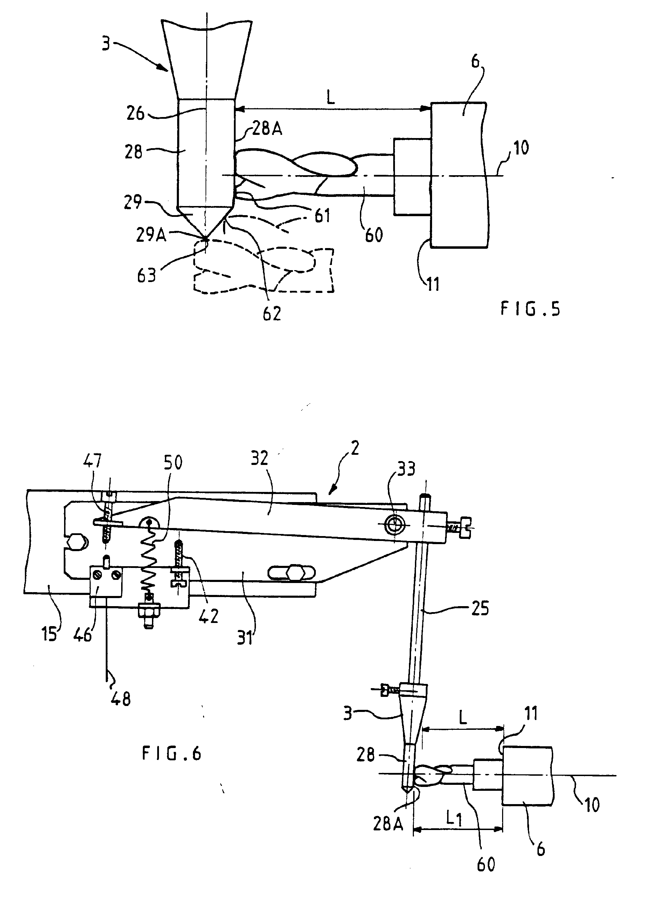

Le support 1 est constitué dans ce mode de réalisation d'une potence 12 fixée à l'une de ses extrémités au sol 14, et portant, à son autre extrémité, un profilé 15, monté pivotant autour d'un axe vertical 16, et l'équipage mobile qui y est fixé. Cet agencement permet ainsi d'effacer le profilé 15, par pivotement autour de l'axe 16, afin de pouvoir effectuer sans gêne la vérification et la maintenance de la machine-outil. L'équipage mobile 2 est monté sur le profilé 15, et sera décrit en regard des figures 4 et 5. Outre le support 1, l'équipage mobile 2 portant le palpeur 3 et le gabarit de référence 4, le dispositif selon l'invention comporte des moyens de détection 17 du déplacement dudit palpeur, lié à l'équipage mobile, par rapport au support fixe 1 ; lesdits moyens 17 seront décrits en regard de la figure 3.

Le gabarit 4, montré sur la figure 2, se présente par exemple sous forme d'une plaque introduite dans le mandrin 5 monté dans la broche 6 de la machine-outil 7. La plaque, formant ledit gabarit 4, est positionnée dans un plan vertical défini par le repère YOZ illustré sur la figure 2 et est donc agencée dans un plan perpendiculaire au plan défini par la face 11 de la broche, l'axe de rotation 10 de celle-ci étant parallèle à l'axe OY du repère YOZ. Le gabarit 4 simule par conséquent un outil et définit ainsi une position de référence préétablie, qui sera programmée dans le logiciel 18 de la machine-outil 7 et qui correspond à une position initiale imposée à chacun des outils, lorsque ceux-ci sont maintenus successivement et automatiquement dans la broche avant le début de l'usinage, comme on le verra ultérieurement.

Le gabarit 4 présente un premier bord de référence 20 disposé perpendiculairement à l'axe de rotation 10 de la broche et parallèlement à l'axe OZ du repère YOZ, un deuxième bord de référence 21 prolongeant de façon perpendiculaire et dans le plan du gabarit une extrémité du premier bord 20, ledit deuxième bord 21 étant parallèle à l'axe OY du repère YOZ et à l'axe de rotation 10 de la broche, et un troisième bord de référence incliné 22 prolongeant, dans le plan dudit gabarit, l'autre extrémité dudit premier bord 20. Ces trois bords de référence 20,21 et 22 vont à leur tour servir de référence pour le positionnement dudit palpeur 3, de façon qu'il soit amené dans la position indiquée par la figure 2.

Le palpeur 3 est maintenu par l'intermédiaire d'une vis 24 sur une tige 25 de l'équipage mobile 2, comme on le voit sur la figure 3, et il présente la forme d'un manchon cylindrique dont l'axe 26, commun à la tige 25 et au palpeur 3, est disposé verticalement suivant l'axe OZ du repère YOZ, le palpeur étant avantageusement revêtu de polytétrafluoroéthylène. Le palpeur 3 comporte une partie conique 27, dont une génératrice 27A est susceptible de venir tangentiellement au contact du troisième bord de référence 22 du gabarit 4, une partie cylindrique 28 prolongeant vers le bas la partie conique 27, et dont une génératrice 28A est susceptible de venir tangentiellement au contact du premier bord de référence 20 du gabarit, et, enfin, un cône d'extrémité 29 terminant la partie cylindrique 28 et dont la pointe 29A dudit cône est susceptible de venir tangentiellement au contact du deuxième bord de référence 22 du gabarit 4. La position du palpeur 3 correspond alors exactement à celle du gabarit de référence.

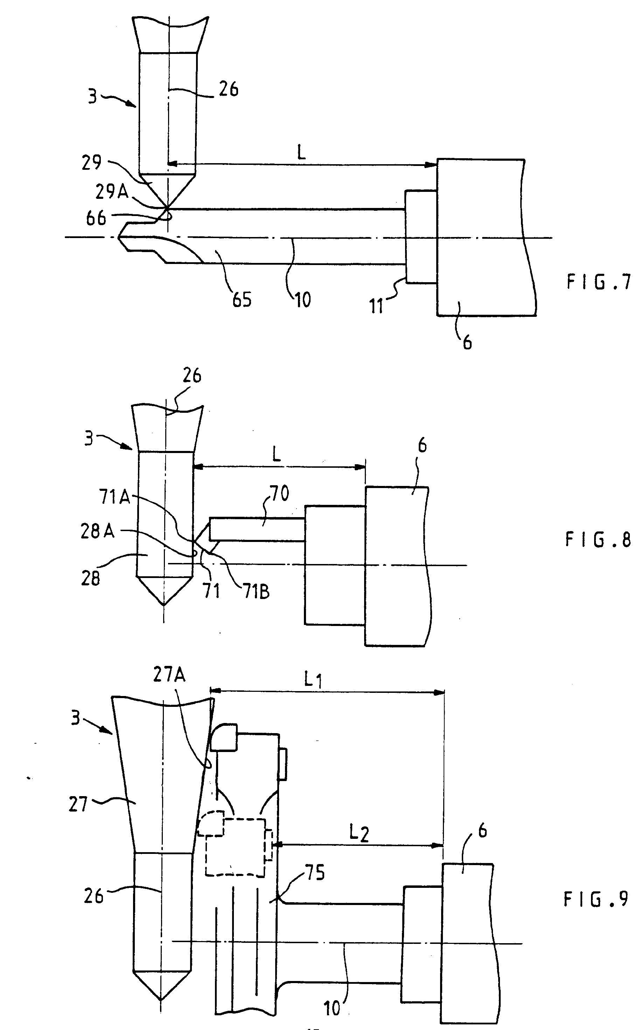

Ainsi, en prenant comme origine de l'axe OY du repère YOZ la face 11 de la broche 6, on peut définir une distance L qui est comprise entre cette face 11 et la génératrice 28A de la partie cylindrique 28 du palpeur et qui correspond à la longueur de sortie imposée aux différents outils utilisés pendant le cycle d'usinage proprement dit. La pointe 29A du cône 29 dudit palpeur est utilisée notamment pour la vérification des diamètres des outils, et la partie conique 27 dudit palpeur peut servir de référence pour le contrôle des longueurs et diamètre d'outils spécifiques comme on le verra en regard de la figure 9.

L'équipage mobile 2, montré notamment sur la figure 3, comporte une plaque 31 liée fixement au profilé 15 du support 1, et un levier 32 monté pivotant autour d'un axe 33 par rapport à la plaque 31. L'axe 33 peut être monté sur un roulement 34, et est orthogonal à l'axe de rotation 10 de la broche 6. Comme on le voit sur cette figure, l'extrémité de la tige 25, opposée à celle portant le palpeur 3, est montée dans un perçage 35 ménagé dans le levier 32 et est fixé à celui-ci par l'intermédiaire d'une vis 36. On peut ainsi régler la position du palpeur le long de l'axe 26, qui est orthogonal à l'axe de pivotement 33 du levier 32 par rapport à la plaque 31, les moyens pour la détection du déplacement 17 du palpeur 3 étant disposés entre la plaque fixée au profilé et le levier.

A ce propos, le montage de la plaque 31 de l'équipage mobile 2 sur le profilé 15 du support 1 est réalisé d'une part, par des moyens de positionnement permettant de disposer la plaque dans un plan parallèle au plan formé par l'axe de rotation 10 de la broche et l'axe vertical 26 du palpeur, et d'autre part, par des moyens de fixation.

Les moyens de positionnement sont, dans un mode préféré de réalisation, constitués par trois vérins 38, dont une extrémité est fixée au profilé 15 et dont l'autre extrémité est fixée à la plaque 31. Ainsi, comme le montre schématiquement la figure 4, on peut régler les trois vérins 38, de façon que la plan de la plaque 31 soit dans la position appropriée. Quant aux moyens de fixation, ils sont constitués par trois vis 39, traversant des lumières correspondantes 40 ménagées dans la plaque 31 et se vissant dans la face correspondante du profilé 15. Cette réalisation permet de pouvoir régler le positionnement de la plaque 31 dans son plan et d'amener le palpeur 3 lié à l'équipage mobile vers le gabarit 4. Par ailleurs, une vis de réglage 42 du pivotement du levier 32 par rapport à la plaque 31 est prévue sur une embase 44 fixée à la plaque, l'extrémité de la vis 42 étant au contact du levier 32. En vissant ou en dévissant cette vis, on peut régler le pivotement du levier et de la tige portant le palpeur par rapport à la plaque 31.

Les moyens pour la détection du déplacement 17 du palpeur 3 comportent un contacteur 46 fixé à l'embase 44 solidaire de la plaque 31, et un organe 47 lié au levier 32 et venant en appui sur le contacteur 46. L'organe 47 peut être une vis, comme il est représenté sur la figure 3.

Le contacteur 46 est relié au logiciel 18 de la machine-outil 7 par une liaison 48 indiquée sur la figure 1.

Par ailleurs, il est également prévu des moyens de rappel élastiques 50, tels qu'un ressort, dont une extrémité est reliée en 51 à l'embase 44 et dont l'autre extrémité est reliée en 52 au levier 32 ; le ressort 50 permet de rappeler en position initiale le levier 32 vers la plaque 31.

On peut également prévoir un capot de protection 53 enveloppant et protégeant l'ensemble de l'équipage mobile 2, ledit capot étant représenté sur les figures 1 et 3 en traits interrompus.

Le fonctionnement du système selon l'invention sera décrit en regard des figures 5 à 9.

L'usinage des pièces sur un centre d'usinage, comportant la machine-outil 7 et le système selon l'invention, nécessite la réalisation d'un programme qui commande la sélection de l'outil, sa mise en place dans la broche de la machine, la prise en compte de la longueur introduite dans le programme du logiciel, la rotation de la broche, la sélection du type d'outil à contrôler, et les déplacements pour le contrôle desdits outils devant le palpeur.

Le gabarit 4, qui est monté dans la broche de la machine-outil, définit la position de référence déterminée par l'opérateur, et représente la position que doit occuper chaque outil, si les données relatives à leur longueur et à leur diamètre, entrées dans le logiciel, sont correctes.

Le palpeur 3 est amené tangentiellement audit gabarit de référence, de façon que les génératrices 27A et 28A, respectivement des parties conique 27 et cylindrique 28, et la pointe 29A du cône d'extrémité 29 viennent affleurer les bords de référence correspondants 20,21 et 22 du gabarit 4.

A ce moment là, le gabarit 4 peut être retiré de la broche 6 de la machine-outil, ledit palpeur 3 servant à son tour de position de référence. Le réglage du positionnement du palpeur par rapport au gabarit est réalisé aisément par les différentes vis de réglage 36, 39 et 42 et les vérins 38.

L'opérateur peut déclencher alors le cycle de fonctionnement programmé dans le logiciel 18 de la machine-outil. La figure 5 montre par exemple un outil tel qu'une fraise 60, (ledit outil pouvant être un taraud, un foret, un alésoir, etc...) qui a été saisi par un manipulateur, non représenté, lié à la machine, et qui l'introduit dans la broche 6 de la machine. Le programme amène l'outil dans la position imposée et qui doit correspondre à la position initiale de référence occupée par le palpeur. Dans le cas de la figure 5, la face d'extrémité 61 de la fraise vient affleurer la génératrice 28A de la partie cylindrique 28 du palpeur 3, ce qui signifie que la longueur de l'outil comprise entre la face externe de la broche et sa face d'extrémité et introduite dans le logiciel, correspond bien à la longueur de référence L comprise entre la génératrice 28A du palpeur et la face 11 de la broche. Dans une position intermédiaire de la fraise 60, représentée en traits mixtes et occupée par la fraise au cours de son déplacement initialement programmé, l'opérateur peut également contrôler son profil d'extrémité 62 qui suit de façon tangente la partie conique 29 du palpeur. Lorsque la fraise arrive dans la position illustrée, en traits pointillés, l'opérateur peut contrôler le diamètre de la fraise dont la génératrice 63 est alors tangente à la pointe du cône.

Par conséquent, si la fraise au cours des contrôles de sa longueur, de son profil et de son diamètre vient tangentiellement au contact des différentes parties de référence du palpeur, les paramètres introduits dans le logiciel concernant cet outil sont exactes et l'usinage des pièces par cet outil s'effectuera normalement.

En revanche, si l'un des par:mètres entrés tans le logiciel est incorrect, la fraise soit s'arrêtera avant de contacter le palpeur, soit repoussera celui-ci. On a représenté ce deuxième cas sur la figure 6. On a supposé que la longueur L1 de l'outil entrée dans le logiciel est incorrecte, par rapport à la longueur L initiale de référence, ce qui provoque le contact fraise-palpeur. Ce dernier entraîne le pivotement du levier 32 autour de l'axe 33 et de façon concomittante le pivotement de l'organe 47 qui s'éloigne du contacteur 46. Ce dernier, n'étant plus en contact avec l'organe 47, interrompt, grâce à la liaison 48 reliée au logiciel 18, les avances et la rotation de la broche 6. L'opérateur peut ainsi analyser la raison de cette interruption et en rechercher les causes pour apporter dans la programmation de l'outil concerné les corrections nécessaires. L'outil est retiré de la broche, ce qui entraîne le rappel en position initiale de référence du palpeur par l'intermédiaire du ressort 50, le levier 32 venant en butée contre la vis 42 et l'organe 47 venant en appui sur le contacteur 46.

Le dispositif selon l'invention permet aussi le contrôle et la vérification de la programmation d'outils spécifiques, tels que la fraise spéciale 65 illustrée sur la figure 7. L'arête de coupe 66 doit venir affleurer la pointe 29A du cône d'extrémité du palpeur 9, si les données relatives à sa longueur et à son diamètre sont correctes. Dans la position illustrée, l'opérateur vérifie visuellement ces paramètres. Dans le cas où l'un de ceux-ci serait inexact, l'arête de coupe 66 viendrait soit en contact avec le palpeur, entraînant le basculement de l'équipage mobile 2 comme pour l'exemple de la figure 5, soit dans une position éloignée de la pointe 29A du palpeur, l'opérateur s'apercevant alors de la mauvaise position de l'arête de coupe 66 par rapport à la pointe 29A du palpeur.

Le dispositif de l'invention permet aussi le contrôle de la longueur L des barres de chariotage, telles que celle illustrée et portant la référence 70 sur la figure 8. Dans ce cas, la longueur de l'outil entrée dans le logiciel correspond à la longueur de référence, l'arête de coupe 71 venant en 71A en contact tangentiel avec la génératrice 28A de la partie cylindrique 28 du palpeur 3. Dans ce type d'outil, le contrôle du diamètre est impossible à réaliser puisque le point 71B de l'arête de coupe 71, définissant le diamètre, est situé en retrait par rapport au point 71A de l'arête 71.

Enfin, les fraises dite "3 tailles" (à trois arêtes de coupe) peuvent être également contrôlées. Comme on le voit sur la figure 9, l'opérateur contrôle la longueur L1 et le diamètre plus le rayon dans la position représentée en traits continus de la fraise 75, qui est alors tangent à la génératrice 27A du palpeur 3. L'opérateur contrôle ensuite la longueur L2 dans la position représentée en traits pointillés où le programme du logiciel 18 sélectionne un correcteur correspondant à la longueur L2, et où l'outil effectue un déplacement tangent à la génératrice 27A du palpeur.

Lorsque les différents contrôles d'un outil destiné à être utilisé dans le programme d'usinage des pièces sont effectués et les éventuelles corrections faites, l'usinage des pièces qui lui revient peut débuter.

Ainsi, le dispositif de l'invention permet d'éviter les chocs entre les outils, dont la longueur et le diamètre entrés dans le logiciel seraient erronés, et les pièces, et les risques de blessure qui peuvent s'ensuivre pour l'opérateur.

De plus, le dispositif procure un respect du cycle de production et donc un gain de temps, une grande sécurité, une fiabilité totale, et une diminution des coûts de maintenance et d'exploitation.

## Revendications

1 - Procédé pour la vérification de la programmation de données contenues dans un logiciel pour machine-outil et relatives au diamètre et/ou à la longueur de sortie d'outils destinés à être montés, selon un cycle d'usinage automatique programmé dans ledit logiciel, sur une broche (6) de la machine-outil (7), ledit procédé permettant de vérifier, avant chaque utilisation des outils pour l'usinage des pièces, les données relatives au diamètre et/ou à la longueur de sortie de chaque outil entrées dans ledit logiciel, ledit procédé consistant :

– à agencer, à proximité de la broche de la machine-outil, un équipage mobile (2) portant à une extrémité un palpeur (3) ;

– à monter, entre ledit palpeur (3) et ledit équipage mobile (2), des moyens de détection (17) du déplacement dudit palpeur (3) ;

– à introduire un gabarit (4) dans la broche (6) de ladite machine-outil, pour définir une position de référence correspondant à une position initiale imposée à chacun desdits outils lorsque ceux-ci sont maintenus successivement et automatiquement dans ladite broche avant le début ce l'usinage ;

– à amener ledit palpeur (3) dudit équipage, de façon tangente audit gabarit (4), afin que ledit palpeur définisse à son tour ladite position de référence ;

– à retirer ledit gabarit de ladite broche ; puis,

– à monter chacun desdits outils selon le c'gicle d'usinage successivement et automatiquement dans la broche, chacun de ceux-ci venant soit affleurer ledit palpeur (3), ce qui indique que la programmation du diamètre et/ou de la longueur de sortie de chacun desdits outils est correcte, soit toucher ledit palpeur (3) en entraînant le déplacement dudit équipage mobile (2) par rapport audit support (1) et le déclenchement des moyens de détection (17) qui arrêtent le cycle d'usinage.

2 - Dispositif pour la vérification de la programmation de données contenues dans un logiciel pour machine-outil et relatives au diamètre et/ou à la longueur de sortie d'outils destinés à être montés, selon un cycle d'usinage automatique programmé dans ledit logiciel, sur une broche (6) de la machine-outil (7), ledit dispositif permettant de vérifier, avant chaque utilisation des outils pour l'usinage des pièces, les données relatives au diamètre et/ou à la longueur de sortie de chaque outil entrées dans ledit logiciel, ledit dispositif comportant :

– un support fixe (1) ;

– un équipage mobile (2), monté sur ledit support et susceptible d'être déplacé par rapport à celui-ci, ledit équipage portant à une extrémité un palpeur (3) ;

– des moyens de détection (17) du déplacement dudit palpeur (3) lié audit équipage (2) par rapport audit support fixe (1) ; et

– un gabarit (4) introduit dans la broche (6) de ladite machine-outil et définissant une position de référence correspondant à une position initiale imposée à chacun desdits outils lorsque ceux-ci sont maintenus successivement et automatiquement dans ladite broche avant le début de l'usinage, le palpeur (3) dudit équipage étant ramené de façon tangente audit gabarit (4) afin de définir à son tour ladite position de référence, ledit gabarit (4) se présentant sous forme d'une plaque susceptible d'être introduite par l'intermédiaire d'un mandrin (5) dans la broche (6) de la machine-outil, et le plan de la plaque formant ledit gabarit (4) étant orthogonal au plan défini par la face de la broche (11), et parallèle à l'axe de rotation (10) de celle-ci et ledit gabarit (4) présentant un premier bord de référence (20) disposé perpendiculairement à l'axe de rotation (10) de la broche et parallèlement à la face (11) de celle-ci, un deuxième bord de référence (21) prolongeant de façon perpendiculaire et dans le plan dudit gabarit une extrémité dudit premier bord (20), et qui est alors disposé parallèlement à l'axe de rotation (10) de la broche et perpendiculairement à la face (11) de celle-ci, et un troisième bord de référence incliné (22) prolongeant dans le plan dudit gabarit l'autre extrémité dudit premier bord (20).

3 - Dispositif selon la revendication 2, caractérisé en ce que ledit palpeur (3), susceptible d'être amené de façon tangente audit gabarit (4), présente un contour qui comprend une partie conique (27), dont une génératrice (27A) est susceptible de venir, de façon tangente, au contact du troisième bord (22) dudit gabarit, une partie cylindrique (28) prolongeant la partie conique et dont une génératrice (28A) est susceptible de venir, de façon tangente, au contact du premier bord (20) dudit gabarit, et un cône d'extrémité (29) prolongeant ladite partie cylindrique (28) et dont la pointe (29A) est susceptible de venir, de façon tangente, au contact du deuxième bord (21) dudit gabarit.

4 - Dispositif selon l'une des revendications 2 ou 3, caractérisé en ce que ledit équipage mobile (2) comporte une plaque (31) susceptible d'être liée fixement audit support (1) et un levier (32), monté pivotant autour d'un axe (33) par rapport à ladite plaque et portant à une extrémité une tige (25) munie dudit palpeur (3), lesdits moyens de détection (17) du déplacement dudit palpeur étant alors disposés entre ledit levier (32) et ladite plaque (31) fixée audit support (1).

5 - Dispositif selon la revendication 4, caractérisé en ce que la tige (25) et le palpeur (3) sont disposés coaxialement selon un axe vertical (26) perpendiculaire à l'axe de rotation (10) de la broche, et l'axe de pivotement (33) du levier (32) portant la tige et le palpeur est perpendiculaire audit axe vertical (26) commun à la tige et au palpeur et à l'axe de rotation (10) de la broche.

6 - Dispositif selon la revendication 5, caractérisé en ce que la position de la tige et du palpeur le long de l'axe vertical est réglable au moyen de vis (36) ou analogues.

7 - Dispositif selon l'une des revendications 4 à 6, caractérisé en ce que le montage de la plaque (31) dudit équipage mobile (2) sur ledit support (1) est réalisé d'une part, par l'intermédiaire de moyens de positionnement réglables (38) prévus sur la plaque (31) et sur le support (1) et permettant de disposer ladite plaque dans un plan parallèle au plan formé par l'axe de rotation (10) de la broche et l'axe vertical (26) du palpeur, et d'autre part, par l'intermédiaire de moyens de fixation (39) solidarisant la plaque (31) audit support (1).

8 - Dispositif selon la revendication 7, caractérisé en ce que lesdits moyens de fixation (39) de la plaque au support sont constitués par des vis ou analogues traversant des lumières (40) ménagées dans la plaque (31), de sorte que celle-ci peut être déplacée dans son plan de positionnement, pour permettre le réglage en position du palpeur (3) contre ledit gabarit (4).

9 - Dispositif selon l'une des revendications 4 à 8, caractérisé en ce que lesdits moyens de détection (17) comportent un contacteur (46) fixé à une embase (44) liée à ladite plaque (32), ledit contacteur (46) étant en liaison avec le logiciel de la machine, et un organe (47) lié audit levier (32) et venant au contact dudit contacteur (46), et des moyens de rappel élastiques (50) sont prévus entre ladite embase (44) et ledit levier (32), de sorte que lorsque ledit palpeur (3) a été touché par un outil, ledit levier (32) bascule autour de son axe de pivotement (33) entraînant l'éloignement dudit organe (47) du contacteur (46), et l'interruption du cycle de fonctionnement de la machine, les moyens de rappel élastiques (50) rappelant ensuite en position initiale ledit levier.

10 - Dispositif selon l'une des revendications 2 à 9, caractérisé en ce que ledit support (1) est constitué d'une potence fixe (12) et d'un profilé (15) monté pivotant autour d'un axe de rotation (16) sur ladite potence, ledit équipage étant monté sur ladite potence.

11 - Dispositif selon la revendication 10, caractérisé en ce que ladite potence (12) est fixée au sol (14) à proximité de ladite machine-outil (7).

## Patentansprüche

1. - System zur Nachprüfung der Programmierung von in der Software einer Werkzeugmaschine enthaltenen Daten, welche sich auf den Durchmesser und/oder die Ausgangslänge von Werkzeugen beziehen, welche gemäß einem in der genannten Software programmierten automatischen Bearbeitungszyklus in eine Spindel (6) der Werkzeugmaschine (7) gespannt werden sollen, welches genannte System vor jeder Benutzung der Werkzeuge für die Bearbeitung der Werkstücke die Nachprüfung der Daten für den Durchmesser und/oder die Ausgangslänge des jeweiligen Werkzeuges, welche in die genannte Software eingegeben wurden, ermöglicht und welches darin besteht,

   – nahe der Spindel der Werkzeugmaschine eine bewegliche Einrichtung (2) anzuordnen, welche an dem einen Ende einen Fühler (3) trägt;

   – zwischen dem genannten Fühler (3) und der genannten beweglichen Einrichtung (2) Mittel (17) zum Nachweis der Verstellung des genannten Fühlers (3) anzuordnen;

   – in die Spindel (6) der genannten Werkzeugmaschine eine Lehre (4) einzusetzen, um eine Bezugsposition zu definieren, welche einer Anfangsposition entspricht, in welche jedes der genannten Werkzeuge gebracht wird, wenn diese vor Beginn der Bearbeitung nacheinander und automatisch in der genannten Spindel gehalten werden;

   – den genannten Fühler (3) der genannten beweglichen Einrichtung an die genannte Lehre (4) heranzuführen, bis er diese streifend berührt, so daß der genannte Fühler seinerseits die genannte Bezugsposition definiert;

   – die genannte Lehre aus der genannten Spindel zu entfernen; und dann

   – jedes der genannten Werkzeuge gemäß dem Bearbeitungszyklus nacheinander und automatisch in die Spindel zu spannen, wonach jedes dieser Werkzeuge entweder mit dem genannten Fühler (3) bündig ist, was anzeigt, daß die Programmierung des Durchmessers und/oder der Ausgangslänge jedes der genannten Werkzeuge korrekt ist, oder den genannten Fühler (3) berührt und dadurch die bewegliche Einrichtung (2) gegenüber dem genannten Träger (1) verstellt und Nachweismittel (17) betätigt, welche den Bearbeitungszyklus anhalten.

2. - Vorrichtung zur Nachprüfung der Programmierung von in der Software einer Werkzeugmaschine enthaltenen Daten, welche sich auf den Durchmesser und /oder die Ausgangslänge von Werkzeugen beziehen, welche gemäß einem in der genannten Software programmierten automatischen Bearbeitungszyklus in eine Spindel (6) der Werkzeugmaschine (7) gespannt werden sollen, welche genannte Vorrichtung vor jeder Benutzung der Werkzeuge für die Bearbeitung der Werkstücke die Nachprüfung der Daten für den Durchmesser und/oder die Ausgangslänge des jeweiligen Werkzeuges, welche in die genannte Software eingegeben wurden, ermöglicht und welche genannte Vorrichtung
– einen festen Träger (1);
– eine bewegliche Einrichtung (2), welche auf dem genannten Träger angebracht ist und gegenüber diesem bewegt werden kann, wobei die genannte bewegliche Einrichtung an einem Ende einen Fühler (3) trägt;
– Mittel (17) zum Nachweis der Veratellung des genannten Fühlers (3), welcher mit der genannten beweglichen Einrichtung (2) verbunden ist, gegenüber dem genannten festen Träger (1), und
– eine in die Spindel (6) der genannten Werkzeugmaschine eingesetzte Lehre (4) umfaßt, welche eine Bezugsposition definiert, die einer Anfangsposition entspricht, in welche jedes der genannten Werkzeuge gebracht wird, wenn diese vor Beginn der Bearbeitung nacheinander und automatisch in der genannten Spindel gehalten werden, wobei der Fühler (3) der genannten beweglichen Einrichtung an die genannte Lehre (4) herangeführt wird, bis er diese streifend berührt, so daß er seinerseits die genannte Bezugsposition definiert, während die genannte Lehre (4) die Form einer Platte aufweist, welche mittels eines Dornes (5) in die Spindel (6) der Werkzeugmaschine eingesetzt werden kann, die Ebene der die genannte Lehre (4) bildenden Platte senkrecht zu der durch die Stirnfläche (11) der Spindel definierten Ebene und parallel zur Drehachse (10) der Spindel orientiert ist und die genannte Lehre (4) eine erste Bezugskante (20), welche senkrecht zur Drehachse (10) der Spindel und parallel zu deren Stirnfläche (11) angeordnet ist, eine zweite Bezugskante (21), welche das eine Ende der genannten ersten Bezugskante (20) senkrecht zu dieser und in der Ebene der genannten Lehre verlängert und somit parallel zu der Drehachse (10) der Spindel und senkrecht zu deren Stirnfläche (11) angeordnet ist, sowie eine dritte, geneigte Bezugskante (22) aufweist, welche das andere Ende der genannten ersten Bezugskante (20) in der Ebene der genannten Lehre verlängert.

3. - Vorrichtung gemäß Anspruch 2,

dadurch gekennzeichnet, daß der genannte Fühler (3), welcher so an die genannte Lehre (4) herangeführt werden kann, daß er diese streifend berührt, eine Kontur aufweist, welche einen konischen Teil (27), von welchem eine Erzeugende (27A) in streifende Berührung mit der dritten Bezugskante (22) der genannten Lehre treten kann, einen zylindrischen Teil (28), welcher den konischen Teil fortsetzt und von welchem eine Erzeugende (28A) in streifende Berührung mit der ersten Bezugskante (20) der genannten Lehre treten kann, sowie einen Endkonus (29) umfaßt, welcher den genannten zylindrischen Teil (28) fortsetzt und dessen Spitze (29A) mit der zweiten Bezugskante (21) der genannten Lehre in streifende Berührung treten kann,

4. - Vorrichtung gemäß Anspruch 2 oder Anspruch 3,

dadurch gekennzeichnet, daß die genannte bewegliche Einrichtung (2) eine Platte (31), welche mit dem genannten Träger (1) fest verbunden werden kann, und einen Hebel (32) umfaßt, welcher um eine Achse (33) gegenüber der genannten Platte kippbar angeordnet ist und an seinem einen Ende eine Stange (25) trägt, welche mit dem genannten Fühler (3) ausgerüstet ist, wobei die genannten Mittal (17) zum Nachweis der Verstellung des genannten Fühlers zwischen dem genannten Hebel (32) und der genannten Platte (31), welche auf dem genannten Träger (1) befestigt ist, angeordnet sind.

5. - Vorrichtung gemäß Anspruch 4,

dadurch gekennzeichnet, daß die Stange (25) und der Fühler (3) koaxial gemäß einer zu der Drehachse (10) der Spindel senkrechten, vertikalen Achsel (26) angeordnet sind und daß die Drehachse (33) des die Stange und den Fühler tragenden Hebels (32) senkrecht zu der gemeinsamen vertikalen Achse (26) der Stange und des Fühlers sowie senkrecht zu der Drehachse (10) der Spindel angeordnet ist.

6. - Vorrichtung gemäß Anspruch 5,

dadurch gekennzeichnet, daß die Position der Stange und des Fühlers längs der vertikalen Achse durch Schrauben (36) oder ähnliche Mittel einstellbar ist.

7. - Vorrichtung gemäß einem der Ansprüche 4 bis 6,

dadurch gekennzeichnet, daß die Anbringung der Platte (31) der genannten beweglichen Einrichtung (2) auf dem genannten Träger (1) einerseits durch auf der Platte (31) und auf dem Träger (1) vorgesehene einstellbare Positionierungsmittel (38), welche es gestatten, die genannte Platte in einer Ebene, welche zu der durch die Drehachse (10) der Spindel und die vertikale Achse (26) des Fühlers gebildeten Ebene parallel ist, anzuordnen, und andererseits durch Befestigungsmittel (39) realisiert wird, welche die Platte (31) mit dem genannten Träger (1) fest verbinden.

8. - Vorrichtung gemäß Anspruch 7,

dadurch gekennzeichnet, daß die genannten Mittel (39) zur Befestigung der Platte auf dem Träger aus Schrauben oder ähnlichen Elementen bestehen, welche durch in der Platte (31) angebrachte Langlöcher (40) verlaufen, so daß die Platte (31) in ihrer Positionierungsebene verschoben werden kann, womit die Positionierung des Fühlers (3) in einer Position, in welcher er an der genannten Lehre (4) anliegt, ermöglicht wird.

9. - Vorrichtung gemäß einem der Ansprüche 4 bis 8, dadurch gekennzeichnet, daß die genannten Nachweismittel (17) einen Schalter (46), welcher auf einem mit der genannten Platte (32) verbundenen Sockel (44) befestigt ist, welcher genannte Schalter (46) mit der Software der Werkzeugmaschine in Verbindung steht, und ein Organ (47) umfassen, welches mit dem genannten Hebel (32) verbunden ist und mit dem genannten Schalter (46) in Berührung tritt, und daß zwischen dem genannten Sockel (44) und dem genannten Hebel (32) elastische Rückstellmittel (50) vorgesehen sind, so daß, wenn der genannte Fühler (3) von einem Werkzeug berührt wird, der genannte Hebel (32) um seine Drehachse (33) kippt und dadurch bewirkt, daß sich das genannte Organ (47) von dem Schalter (46) entfernt und der Funktionszyklus der Werkzeugmaschine unterbrochen wird, wonach die elastischen Rückstellmittel (50) den genannten Hebel in seine Anfangsposition zurückstellen.

10. - Vorrichtung gemäß einem der Ansprüche 2 bis 9, dadurch gekennzeichnet, daß der genannte Träger (1) aus einem ortsfesten Ständer (12) und einem Profilträger (15) besteht, welcher um eine an dem genannten Ständer angebrachte Drehachse (16) schwenkbar ist, wobei die genannte bewegliche Einrichtung an dem genannten Ständer befestigt ist.

11. - Vorrichtung gemäß Anspruch 10, dadurch gekennzeichnet, daß der genannte Ständer (12) nahe bei der genannten Werkzeugmaschine (7) am Boden (14) befestigt ist.

**Claims**

1. - Procedure for the checking of the programming of data contained in an application routine for a machine tool and relating to the diameter and/or to the length of outward movement of tools intended, according to an automatic machining cycle programmed into the said application routine, to be mounted onto a spindle (6) of the machine tool (7), the said procedure permitting, before each use of the tools for the machining of the pieces, checking of the data relating to the diameter and/or to the length of outward movement of each tool which are entered into the said application routine, the said procedure consisting:

– in arranging, in proximity to the spindle of the machine tool, a mobile equipment head (2) carrying a tracer pin (3) at one extremity;

– in mounting, between the said tracer pin (3) and the said mobile equipment head (2), means of detection (17) of the displacement of the said tracer pin (3);

– in introducing a template (4) into the spindle (6) of the said machine tool, in order to define a reference position corresponding to an initial position imposed on each of the said tools when the latter are held successively and automatically in the said spindle before the start of the machining;

– in bringing up the said tracer pin (3) of the said equipment head, at a tangent to the said template (4), so that the said tracer pin in its turn defines the said reference position;

– in withdrawing the said template from the said spindle; then,

– in mounting each of the said tools according to the machining cycle successively and automatically into the spindle, each of the latter coming either flush up against the said tracer pin (3), which indicates that the programming of the diameter and/or of the length of outward movement of each of the said tools is correct, or to touch the said tracer pin (3), thereby giving rise to displacement of the said mobile equipment head (2) with respect to the said support (1) and the triggering of the means of detection (17) which stop the machining cycle.

2. - Device for the checking of the programming of data, contained in an application routine for a machine tool and relating to the diameter and/or to the length of outward movement of tools intended, according to an automatic machining cycle programmed into the said application routine, to be mounted onto a spindle (6) of the machine tool (7), the said device permitting, before each use of the tools for the machining of the pieces, checking of the data relating to the diameter and/or to the length of outward movement of each tool which are entered into the said application routine, the said device comprising:

– a fixed support (1);

– a mobile equipment head (2), mounted on the said support and capable of being displaced with respect to the latter, the said equipment head carrying, at one extremity, a tracer pin (3);

– means of detection (17) of the displacement of the said tracer pin (3) linked to the said equipment head (2) with respect to the said fixed support (1); and

– a template (4) introduced into the spindle (6) of the said machine tool and defining a reference position corresponding to an initial position imposed on each of the said tools when the latter are held successively and automatically in the said spindle before the start of the machining, the tracer pin (3) of the said equipment head being brought up at a tangent to the said template (4) in order to define in its turn the said reference position, the said template (4) having the form of a plate capable of being introduced by the use of a mandrel (5) into the spindle (6) of the machine tool, and the plane of the plate forming the said template (4) being orthogonal to the plane defined by the face of the spindle (11), and parallel to the axis of rotation (10) of the latter and the said template (4) having a first reference edge (20) arranged perpendicular to the axis of rotation (10) of the spindle and parallel to the face (11) of the latter, a second reference edge (21) prolonging, in the perpendicular and in the plane of the said template, one extremity of the said first edge (20), and which is then arranged parallel to the axis of rotation (10) of the spindle and perpendicular to the face (11) of the latter, and a third, inclined reference edge (22), prolonging in the plane of the said template the other extremity of the said first edge (20).

3. - Device according to Claim 2, characterised in that the said tracer pin (3), capable of being brought up at a tangent to the said template (4), has a contour which comprises a conical part (27), a generatrice (27A) of which is able to come, at a tangent, into contact with the third edge (22) of the said template, a cylindrical part (28) prolonging the conical part and of which a generatrice (28A) is capable of coming, at a tangent, into contact with the first edge (20) of the said template, and a cone at the extremity (29) prolonging the said cylindrical part (28) and whose point (29A) is capable of coming, at a tangent, into contact with the second edge (21) of the said template.

4. - Device according to one of Claims 2 or 3, characterised in that the said mobile equipment head (2) comprises a plate (31) capable of being firmly linked to the said support (1) and a lever (32), mounted pivotally around a shaft (33) with respect to the same plate and carrying, at one extremity, a stalk (25) fitted with the said tracer pin (3), the said means of detection (17) of the displacement of the said tracer pin being then arranged between the said lever (32) and the said plate (31) fixed to the said support (1).

5. - Device according to Claim 4, characterised in that the stalk (25) and the tracer pin (3) are arranged coaxially along a vertical axis (26) perpendicular to the axis of rotation (10) of the spindle, and the pivoting shaft (33) of the lever (32) carrying the stalk and the tracer pin is perpendicular to the said vertical axis (26) common to the stalk and to the tracer pin and to the axis of rotation (10) of the spindle.

6. - Device according to Claim 5, characterised in that the position of the stalk and of the tracer pin along the vertical axis is adjustable by means of screws (36) or similar devices.

7. - Device according to one of Claims 4 to 6, characterised in that the mounting of the plate (31) of the said mobile equipment head (2) onto the said support (1) is carried out, on the one hand, by the use of adjustable means of positioning (38) provided on the plate (31) and on the support (1) and permitting the arrangement of the said plate in a plane parallel to the plane formed by the axis of rotation (10) of the spindle and the vertical axis (26) of the tracer pin and, on the other hand, by the use of means of fixing (39) integrating the plate (31) with the said support (1).

8. - Device according to Claim 7, characterised in that the said means of fixing (39) of the plate to the support are constituted by screws or similar devices passing through openings (40) let into the plate (31), such that the latter can be displaced in its positioning plane, in order to permit adjustment in position of the tracer pin (3) against the said template (4).

9. - Device according to one of Claims 4 to 8, characterised in that the said means of detection (17) comprise a contactor (46) fixed to a base plate (44) limited to the said plate (32), the said contactor (46) being in a link with the application routine of the machine, and a member (47) linked to the said lever (32) and coming into contact with the said contactor (46), and means of elastic return (50) are provided between the said base plate (44) and the said lever (32), such that when the said tracer pin (3) has been touched by a tool, the said lever (32) tilts around its pivoting shaft (33), bringing about the separation of the said member (47) of the contactor (46) and the interruption of the cycle of operation of the machine, the means of elastic return (50) then returning the said lever into the initial position.

10. - Device according to one of Claims 2 to 9, characterised in that the said support (1) is constituted by a fixed bracket (12) and by a sectional bar (15) mounted pivotally around a rotation shaft (16) on the said bracket, the said equipment head being mounted on the said bracket.

11. - Device according to Claim 10, characterised in that the said bracket (12) is fixed to the ground (14) in proximity to the said machine tool (7).

FIG.1

FIG.2

FIG.3

FIG.4

FIG.5

FIG.6

F I G . 7

F I G . 8

F I G . 9